# EUROPEAN PATENT APPLICATION

(11) **EP 4 268 608 A1**
(43) Date of publication of application: **01.11.2023**
(21) Application number: 23170006.3
(22) Date of filing: 26.04.2023
(51) Int. Cl.: A23L 7/109, A23L 7/10, A23L 33/00, A23L 33/21

(54) **OAT-BASED PASTA PRODUCT AND METHOD FOR THE PREPARTION THEREOF**

(30) Priority: 26.04.2022 FI 20227058
(71) Applicant: Raisio Nutrition Ltd, 21200 Raisio (FI)
(72) Inventor: Förbom, Tuula, 21110 Naantali (FI); Kuusisto, Päivi, 21100 Naantali (FI)

(57) **Abstract**

The invention relates to an oat-based pasta product containing oat endosperm flour and psyllium and a method for preparing the same.

## Description

### FIELD OF THE INVENTION

The present invention relates to food products and especially to an oat-based pasta product and a method for preparing the pasta product.

### BACKGROUND OF THE INVENTION

Pasta products are currently consumed in increasing amounts, and there is a growing need for good tasting pastas with high nutritional value and good cooking quality. Pasta dishes are fast and easy to make. Therefore, there is a great demand of new types of pasta products in modern cooking.

Traditionally, pasta is made of durum wheat (*Triticum durum*)*,* but also soft wheat (*Triticum aestivum*) is used. The durum pasta is yellow and stronger in taste, whereas pasta containing soft wheat is mild tasting and light yellow. Special pastas may contain e.g. colouring or flavouring agents and/or added fibres (e.g. wholegrain flour of other cereals or fibre-enriched flour). There are different kind of pastas depending on the moisture content. Dry pastas have a water content of about 12% by weight and they have a long shelf life, while fresh pastas have a water content of about 22% by weight and they have the drawback of limited shelf life.

Oat (*Avena sativa*)*,* also called common oat, is used for human consumption as oat flour and rolled oats, but still the most common use of oats is as livestock feed. Oat is nowadays in increasing amounts also used for preparing oat milk and other non-dairy type of food products.

In pasta products oats have been added in amounts of 10-40% by dry weight of the pasta to improve the nutritional value in comparison to traditional durum pasta. Also fibre-rich concentrates of oats such as beta-glucan concentrates, have been added to wheat pasta.

CA3005341 discloses baking doughs made of wholegrain oats. Also a pasta containing by dry weight 70% naked oat wholegrain flour having a higher protein content than common oats, 15% chickpea flour, 7% tapioca starch, 7% psyllium and 1% salt is disclosed. In addition to using oats having a high protein content also additional protein in the form of protein-rich chickpea is added.

On the Finnish market there is also a wholegrain oat pasta containing 18% by weight protein. This pasta contains no other cereals than a specifically selected oat cultivar having a high protein content. Also fibres like apple fibre concentrate have been added. It is however practically difficult to select oat cultivars having such a high protein content and keep them separate from other oat cultivars.

### BRIEF DESCRIPTION OF THE INVENTION

The primary object of the invention is an oat-based pasta product comprising calculated on dry matter basis 85-98 wt% oat endosperm flour and 2.0-15 wt% psyllium.

The second object of the invention is a method for preparing the above-mentioned oat-based pasta product. The method comprises:
- mixing oat endosperm flour, psyllium, water and, if present, colouring and/or flavouring agents to prepare a pasta dough, wherein the amount of water is 45-55% by weight of the amount of dry ingredients,
- extruding the pasta dough through a nozzle with suitable openings and cutting means to form pasta pieces, and
- drying the pasta pieces according to conventional pasta drying procedures to obtain the pasta product,
wherein the total process starting from the mixing step throughout to the start of the drying step is performed at a temperature of at most 50 °C, preferably at most 40 °C.

A further object of the invention is an oat-based pasta product obtainable by the above-mentioned method.

Further objects, aspects, details and embodiments of the present invention will become apparent from the following detailed description, examples and dependent claims.

### DETAILED DESCRIPTION OF THE INVENTION

It has now surprisingly been realised that a pasta product comprising oat endosperm flour and psyllium can be prepared. This product has a firm texture as a dry product. Upon cooking the texture is also well suited as a wheat-free pasta alternative. By using oat endosperm flour the taste of oat is not so profound as if using wholegrain oat flour. The pasta product made of oat endosperm flour is therefore excellent for consumers not used to eating oat but still wanting to have a healthy and nutritious pasta.

Before the invention is further described, it is to be understood that this disclosure is not strictly limited to particular embodiments described herein, as such can of course vary. It is also to be understood that the terminology used herein is for the purpose of describing particular embodiments only, and is not intended to be limiting, since the scope of the present invention will be limited only by the appended claims.

It is also to be noted that, unless defined otherwise, all technical and scientific terms used herein have the same meaning as commonly understood by one of ordinary skill in the art to which this invention belongs.

It is further to be noted that certain features of the disclosure, which are, for clarity, described in the context of separate embodiments, can also be provided in combination in a single embodiment. Conversely, various features of the disclosure, which are, for brevity, described in the context of a single embodiment, can also be provided separately or in any suitable sub-combination. Moreover, all combinations of the embodiments are specifically embraced by the present disclosure and are disclosed herein just as if each and every combination was individually and explicitly disclosed. In addition, all sub-combinations are also specifically embraced by the present disclosure and are disclosed herein just as if each and every such sub-combination was individually and explicitly disclosed herein.

All ranges and parameters, including but not limited to percentages disclosed herein, are understood to encompass any and all subranges subsumed therein, and every number between the endpoints. For example, a stated range of "1 to 10" should be considered to include any and all subranges beginning with a minimum value of 1 or more and ending with a maximum value of 10 or less, including all integers, whole or fractions, contained within the range. Thus, the stated range of "1 to 10" should be construed as supporting, for example, a range of from 1 to 8, from 3 to 6.6, from 1 to 9, from 3.6 to 5, from 3.5 to 9.9, and so forth.

As used herein and in the appended claims, the singular forms "a", "an", and "the" mean one or more. Thus, a singular noun, unless otherwise specified, carries also the meaning of the corresponding plural noun, and vice versa. As such, the terms "a", "an", "one or more" and "at least one" can be used interchangeably.

As used herein, the term "and/or" in a phase such as "X and/or Y" shall be understood to mean either "X and Y" or "X or Y" and shall be taken to provide explicit support for both meanings or for either meaning.

As used herein, the terms "comprising", "including", "containing" and "having" are interchangeable.

As used herein, the expressions "% by weight" and "wt%" are interchangeable. The same applies to the expressions "% by dry weight" and "% on dry matter basis".

As used herein, the term "oat endosperm flour" refers broadly to a powder-type material made by milling or grinding the endosperm of oat groats. In this invention the ash content of the oat endosperm flour is preferably at most 1.7%, more preferably at most 1.6%, still more preferably at most 1.5%, even more preferably at most 1.4% and most preferably at most 1.3% by weigh of the flour. Typically, the ash content of the endosperm flour is 0.8-1.7% or 0.9-1.5% or 1.0-1.3% by weight of the flour. The protein content of oat endosperm flours is typically 8-13% by weight.

As used herein, the term "whole grain oat flour" refers broadly to a powder-type material made by milling or grinding from whole oat groats. Typically, the ash content of wholegrain oat flour is about2.0-2.5% by weigh of the flour, or it might be even higher. The protein content of wholegrain oat flour is typically 13-18% by weight, but can be even higher.

As used herein, the term "oat groat" refers to dehulled oat seeds, i.e. to oat kernels from which the hull has been removed.

As used herein, the term "psyllium" refers to a product rich in dietary fibres, made from the *Plantago ovata* plant's seeds. Herein, the term "seed" refers to the kernel and the husk. Psyllium is commercially available as powders derived from the psyllium husks or seeds. Herein, the term "psyllium" encompasses both product types, unless otherwise specified. Preferably psyllium husk is used in this invention. Psyllium may contain some protein, usually less than 2% by weight of the psyllium powder.

Psyllium is available with varying particle size distributions. In some embodiments, psyllium has an average particle size above 75 µm. In some embodiments, psyllium has an average particle size ranging from 80 µm to 500 µm, from 150 µm to 400 µm, from 200 µm to 350 µm, or from 200 µm to 300 µm. In some further embodiments, psyllium has an average particle size of about 250 µm or 250 µm.

In some embodiments, the present pasta product comprises or consists of oat endosperm flour and psyllium. The amount of the oat endosperm flour may range from 85 to 98% by dry weight, whereas the amount of psyllium may range from 2.0 to 15% by dry weight. In other words, the amount of the oat endosperm flour may vary from 85, 86, 87, 88, 89, 90, 91, 92, 93, 94, 95, 96 or 97% up to 86, 87, 88, 89, 90, 91, 92, 93, 94, 95, 96, 97 or 98% by dry weight Since the oat endosperm flour is the main ingredient of the pasta product, it may be denoted as "oat-based". In some preferred embodiments, especially in those wherein psyllium is provided in the form of psyllium husk, its amount may vary from 2.0 to 6.0%, preferably 2.5 to 6.0% by dry weight. For example, the amount of psyllium husk may vary from 2.5, 3.0, 3.5, 4.0, 4.5, 5.0 or 5.5% up to 3.0, 3.5, 4.0, 4.5, 5.0, 5.5 or 6.0% by dry weight Those skilled in the art can readily choose appropriate amounts of the oat endosperm flour and psyllium, preferably psyllium husk within the disclosed limits such that the total sum of the components does not exceed 100% by weight

In some embodiments, the present oat-based pasta product comprises 85.0-97.5%, preferably 85.5-97.5%, most preferably 95.0-97.0% by dry weight oat endosperm flour and 2.5-6.0%, preferably 2.5-5.5%, most preferably 3.0-5.0% by dry weight psyllium, preferably psyllium husk.

In some other embodiments, the present oat-based pasta product comprises 94.0-97.5%, preferably 94.5-97.5%, most preferably 95.0-97.0% by dry weight oat endosperm flour and 2.5-6.0%, preferably 2.5-5.5%, most preferably 3.0-5.0% by dry weight psyllium, preferably psyllium husk.

Notably, as compared to a reference pasta product made from oat endosperm flour as the only dry ingredient, i.e. without any psyllium, the oat-based pasta product of the invention was clearly less slimy and less sticky after cooking.

The oat endosperm flour may be finely milled or coarsely milled. Both perform well in the present pasta product, but coarse flour may sometimes be preferred, for example for economic reasons. Means and methods for milling and fractionating oat endosperm flour to a desired particle size distribution are readily available in the art The same applies to means and methods for determining the particle size distribution of the fractions obtained or of any existing flour product Particle sizes can be analysed e.g. by sieving.

As used herein, the term "coarse oat endosperm flour" or "coarsely milled oat endosperm flour" refers to a flour having such a particle size distribution that particles having a diameter smaller than 100 µm constitute 35-70 wt% of the flour, while particles having a diameter larger than 500 µm constitute 3-40 wt% of the flour. In some embodiments, particles having a diameter smaller than 100 µm constitute 35-65 wt% of the coarse oat endosperm flour, while particles having a diameter larger than 500 µm constitute 3-30 wt% of the flour. In some further embodiments, particles having a diameter smaller than 100 µm constitute 40-60 wt% of the coarse oat endosperm flour, while particles having a diameter larger than 500 µm constitute 4-20 wt% of the flour.

The term "fine oat endosperm flour" or "finely milled oat endosperm flour", in turn, refers to a flour having such a particle size distribution that 70-90 wt%, preferably 72-88 wt%, more preferably 75-85 wt% of the particles have a diameter smaller than 100 µm, the flour containing no particles having a diameter larger than 500 µm.

When carrying out experiments leading to the present invention, it was surprisingly realised that psyllium appeared to perform better than pectin, for example in providing sufficient viscoelastic properties to the pasta dough as well as in preventing the oat-based dry pasta product being too brittle. Moreover, the present pasta product performed better in a cooking test than a commercially available oat-based pasta product containing pectin in the form of apple fibres, especially in terms of cooking resistance, determined by the amount of matter disintegrated into the cooking water.

Accordingly, in some embodiments, the present pasta product is free of pectin. Preferably, the expression "free of pectin" refers to instances where the present pasta product does not contain any pectin as such, i.e., does not contain pectin as a separate pectin ingredient, for example in the form of purified, isolated or concentrated pectin (e.g., as purified, isolated or concentrated plant fibres). However, as explained below, the pasta product may in some embodiments contain pectin that is provided into the product as part of a colouring and/or flavouring agent, but not as a purified, isolated or concentrated pectin product as such.

In some further embodiments, the present pasta product is free of fruit fibres such as apple fibres. Preferably, the expression "free of fruit fibres" refers to instances where the present pasta product does not contain any fruit fibres as such, i.e., does not contain fruit fibres as a separate fruit fibre ingredient, for example in the form of purified, isolated or concentrated fruit fibres (e.g., as purified, isolated or concentrated fruit fibres).

To express the above issue differently, the present pasta product contains no hydrocolloid other than psyllium as a separate ingredient. As used herein, the term "hydrocolloid" refers to complex nondigestible polysaccharides that dissolve or disperse in water to give thickening or viscosity building effect. Psyllium, pectin, fruit fibres and starch are all examples of hydrocolloids. Notably, vegetable powders are not included herein in the term despite they may contain pectin and starch. Herein, oat flours are also not included in the term "hydrocolloid" although they contain starch.

In accordance with the above, the present pasta product does not contain purified or enriched starch preparation as a separate ingredient.

In some embodiments, the pasta product may contain one or more colouring agents and/or one or more flavouring agents, such as non-legume vegetable powders, including for example those made from various vegetables including, but not limited to, vegetable juices, pulps and purees, by any appropriate drying technique such as spray-drying. Non-limiting examples of such colouring and/or flavouring agents include carrot powders, tomato powders, spinach powders, broccoli powders, and beet root powders. Notably, tomatoes are herein regarded as vegetables, although they are from a botanical perspective classified as fruits. Typically, the fibre content of vegetable powders to be used in the present pasta product is below 40%, preferably below 35% by weight of the vegetable powder. Typically, vegetable powders contain protein at most 30% by weight of the vegetable powder.

The amount of colouring and/or flavouring agents in the present pasta product (if present), may vary from 1-12 wt% on dry matter basis. Thus, the amount of colouring and/or flavouring agents may vary from 1, 2, 3, 4, 5, 6, 7, 8, 9, 10 or 11 wt% up to 2, 3, 4, 5, 6, 7, 8, 9, 10, 11 or 12 wt% on dry matter basis.

In some embodiments, the present oat-based pasta product comprises 85.0-97.0 wt% oat endosperm flour, 2.0-6.0 wt% psyllium, preferably psyllium husk, and 1.0-12.0 wt% colouring and/or flavouring agents on dry matter basis. In some embodiments, the pasta product comprises 85.0-95.5 wt% oat endosperm flour, 2.5-6.0 wt% psyllium, preferably psyllium husk, and 2.0-11.0 wt% colouring and/or flavouring agents on dry matter basis. In some embodiments, the pasta product comprises 85.0-94.0 wt% oat endosperm flour, 3.0-5.0 wt% psyllium, preferably psyllium husk, and 3.0-10.0 wt% colouring and/or flavouring agents on dry matter basis. Those skilled in the art readily understand that the total sum of the ingredients does not exceed 100 wt% on dry matter bases.

Typically, the moisture (water) content of the present ingredients, namely oat endosperm flour, psyllium and, if present, colouring and/or flavouring agents is at most 12%, preferably at most 10% by dry weight of the ingredient in question.

Preferably, the present pasta product is a dry pasta product. Typically, it has a moisture content of 6-14%, preferably 9-13%, most preferably 10-12% by weight of the pasta product.

Generally, the present invention is better suited for short-cut pasta products than for long or medium-length pasta products. Non-limiting examples of short-cut pastas include dischi volante, penne, chifferi, gnocchi, fusilli, conchiglie, creste di galli and the like. However, in some embodiments, the present pasta product may be formulated as a long or medium-length pasta product.

The protein content of the present pasta product may vary but is typically 7.5-15% by weight of the present pasta product in its dry state, i.e., before cooking. Thus, the amount of protein in the pasta product may vary from 7.5, 8, 8.5, 9, 9.5, 10, 10.5, 11, 11.5, 12, 12.5, 13, 13.5, 14 or 14.5% up to 8, 8.5, 9, 9.5, 10, 10.5, 11, 11.5, 12, 12.5, 13, 13.5, 14, 14.5 or 15% by weight of the product. It is surprising that a pasta product with such a low protein content has firm enough a composition to enable successful pasta production. Moreover, the pasta product is not overly brittle when in dry state, as well as has good organoleptic properties after cooking, i.e., is firm and nottoo slimy or sticky. Notably, a commercially available oat pasta product with no other cereal ingredients than oats has a high protein content of 18% by weight pasta product. This is achieved by two selections, first by selecting oat cultivars with particularly high protein content and secondly, by selecting wholegrain oat flours. In some other known oat pastas, high enough protein content is achieved by including additional protein-containing ingredients, such as chickpea flours.

In some embodiments, the present pasta product is free from any material derived from pulses, i.e., edible seeds of plants of the legume family, such as peas, beans and lentils. In other words, use of legume-derived vegetable powders as colouring and/or flavouring agents, or as ingredients for any other purpose, may be excluded. Accordingly, the present pasta product may in such embodiments be denoted as pulse-free or as legume-free. This is an advantageous feature since pulse and legume ingredients may cause digestive problems.

In some further embodiments, the present pasta product is free from egg or any other animal-derived components. Therefore, the present pasta product is suitable for use in both vegetarian and vegan dishes and diets.

The present pasta product has several advantages over existing pasta products. For example, at its simplest, it contains only three ingredients, namely oat endosperm flour, psyllium and water. Even in embodiments, wherein the pasta product comprises one or more vegetable powders as colouring and/or flavouring agents, the list of ingredients is still very short, and therefore the pasta product has a so-called clean label status.

Moreover, the pasta product has a very high content of oats, containing no other cereal-derived ingredients than oat endosperm flour. Notably, despite being a dry pasta product, it has a very short cooking time (around 3 minutes), which is roughly half the cooking time of existing dry oat pastas, or even shorter. In other words, the cooking time of the present dry pasta product resembles that of typical fresh pasta products. One disadvantage associated with fresh pastas is the short shelf life.

The high content of oats in the present pasta product is advantageous also from the nutritional perspective. Indeed, oat pastas are generally regarded healthier than traditional pastas made from wheat. Besides, as containing no other cereal-based material than oat-based material, namely oat endosperm flour, the present pasta product is wheat-free.

The invention also relates to a method for preparing the pasta product containing oat endosperm flour and psyllium, wherein the method comprises
- mixing oat endosperm flour, psyllium and water to prepare a pasta dough, wherein the amount of water is 45-55% by weight of the amount of flour and psyllium,
- extruding the pasta dough through a nozzle with suitable openings and cutting means to form pasta pieces,
- drying the pasta pieces according to conventional pasta drying procedures to obtain the pasta product, and
wherein the total process starting from the mixing step throughout to the start of the drying step is performed at a temperature of at most 50 °C, preferably at most 40 °C.

In one embodiment the oat endosperm flour is first mixed with psyllium and then the water, preferably as steam, is added and mixing continued, preferably at vacuum, for a sufficient time until a homogenous pasta dough is obtained.

In another embodiment the psyllium is first mixed with water and then oat endosperm flour is added and mixing continued, preferably at vacuum, for a sufficient time until a homogenous pasta dough is obtained.

If one or more colouring and/or flavouring agents are used, they are preferably introduced into the pasta dough along with the oat endosperm flour or along with the oat endosperm flour and psyllium. In such cases, the amount of added water is 45-55% by weight of the dry ingredients, i.e., by weight of the oat endosperm flour, psyllium and the colouring and/or flavouring agents.

The pasta dough is extruded and preferably cut to form short-cut pasta pieces before drying.

The drying step can be based on lower temperatures and longer times or higher temperatures and shorter times. Using higher temperatures gives good cooking quality pastas with quite strong surface characteristics. The drying step preferably includes different drying profiles with controlled temperature and moisture levels. Preferably the drying profile contains at least two, but preferably several cycles of different temperatures and moisture levels to allow the pasta to dry faster but produce a smooth surface.

In some embodiments, the drying step is performed in a ventilated room or any other suitable space, preferably at about room temperature such as 18-25°C. Without limitation, a suitable drying time at this temperature ranges from about 24 to about 72 hours, preferably being about 48 hours.

In some other embodiments the drying step is performed at high or very high temperatures such as up to 100°C. A temperature-time cycle can vary e.g. from a few minutes (e.g. 1-30 minutes) at the higher temperatures (e.g. 50-100°C) to a few hours (e.g. 3-20 h) at the lower temperatures (e.g. 30-40°C). If desired, these temperature-time cycles can be repeated a couple of times, for example 2 to 5 times.

The method enables the preparation of an oat-based pasta product having a moisture content of 7-14% by weight, preferably 8-13%, most preferably 9-12% by weight. This kind of pasta is called dry pasta.

The invention will be described in greater detail by means of the following non-limiting examples.

### Example 1

### Preparation of oat pasta products

Oat pasta products where prepared using 96% by weight oat flours and 4% by weight finely ground psyllium husk (having a dietary fibre content of 80% by weight and an average particle size of 250 µm). Two different types of oat endosperm flour were used. They differ in particle size (see Table 1). As reference an oat wholegrain pasta was prepared from wholegrain oat flour and psyllium husk according to the same recipe. All ingredients had a moisture content of about 10% by weight Consequently, the proportions of oat flour and psyllium were 96% and 4%, respectively, also when calculated on dry weight basis.

**Table 1. Particle sizes by sieving of the tested endosperm flours**

| Oat endosperm flours | <100 um | > 500 um |
|---|---|---|
| Coarsely milled (% by weight) | 50.8 | 11.4 |
| Finely milled (% by weight) | 80.5 | 0.0 |

The protein content of both endosperm flours was 10% by weight. The ash content was 1.4% by dry weight

The pasta products were prepared in a pasta preparation unit (Sandore pasta pilot). The dry components were mixed and then tap water was added in an amount of 48% calculated on the weight of the dry components (i.e. not on the dry weight of the components). Mixing was continued for a sufficient time until a smooth dough was obtained. The mixing phase was performed at room temperature. The dough was then extruded to form dischi volanti pasta pieces. The temperature of the extruder was kept below 40 °C by cooling. The pasta was allowed to dry at 20 °C for 2 days in a drying room. The preparation of all three pasta types succeeded well.

### Example 2

### Sensory evaluation

100 g of each of the pastas prepared in Example 1 was added to 1 litre of boiling water and cooked for 3 minutes. A commercial oat pasta was also tested. This pasta contains at least apple fibre and has a protein content of 18% by dry weight. The commercial pasta was cooked as instructed on the package for 8 minutes. The water was removed and the pasta products were evaluated by a trained expert panel of five persons.

**Table 2. Sensory evaluation of the cooked pastas**

| Type of pasta | Appearance | Texture | Taste |
|---|---|---|---|
| Coarsely milled oat endosperm | Light greyish brown colour | Soft and somewhat sticky | Mild oat taste, good, neutral, pleasant |
| Finely milled oat endosperm | Light greyish brown colour | Soft and somewhat sticky | Mild oat taste, good, neutral, pleasant |
| Wholegrain oat | Darker than the two first | Lightly uneven surface, soft and somewhat sticky | Tastes healthy, strong oat taste, too strong |
| Commercial wholegrain oat pasta | Darkest | Rough and uneven surface, sticky | Strong acrid oat taste |

Conclusions: The taste of the pastas made from both endosperm flours was excellent and the stickiness was reduced to an acceptable level by rinsing the cooked pastas. It was surprising the texture of the pasta made of coarsely milled oat endosperm flour was as good as that of the pasta made of finely milled oat endosperm flour, because prior art teaches finely milled flours should be used for making pasta products.

### Example 3

### Cooking test 1

100 g of the pasta products prepared in Example 1 was added to 1l of boiling water. The pasta was cooked vigorously for 3 minutes and the ready pasta was drained in a weighted sieve and lightly shaken, allowed to cool and then weighted to calculate the yield of cooked pasta. The cooking water was immediately after draining poured in a closed vessel and allowed to cool for analysing the dry matter content of the cooking water. The amount of evaporated water in all three samples was essentially the same. The results are given in Table 3.

The dry matter analysis of the well-mixed cooking water was made with a halogen dryer (Mettler Toledo). This analysis was used to show the cooking resistance i.e. the loss of dry matter due to cooking.

**Table 3. Yields and the dry weight of the cooking waters**

| Pasta products | Yield of cooked pasta (% calculated on the dry pasta weight) | Dry matter of cooking water (%) |
|---|---|---|
| Coarsely milled oat endosperm | 195 | 0.6 |
| Finely milled oat endosperm | 195 | 0.6 |
| Wholegrain | 200 | 1.0 |

From the results it can be concluded that the pastas made from the endosperm flours gave the same yields of cooked pasta and also the leakage of dry matter to the cooking water was the same. The wholegrain pasta lost clearly more dry matter during cooking, which is surprising. Therefore, the amount of nutrients remaining in the pasta made of endosperm flour and thus obtained by the consumer eating the pasta was surprisingly good. It was also considered more attractive for consumers when less dry matter leaked into the cooking water. It was expected that the leaked dry matter in the cooking water would have been higher for the pasta made of coarse endosperm flour than for the pasta made of finely milled endosperm flour. Thus, the result of equal amounts of leaked dry matter in the cooking water was surprising.

### Example 4

### Cooking test 2

100 g of pasta product prepared from the coarsely milled endosperm flour in Example 1 was added to 1l of boiling water. The pasta was cooked vigorously for 3 minutes in a pot with a lid and the ready pasta was drained. The cooking water was immediately after draining poured in a closed vessel and allowed to cool for further analyses. The commercial oat pasta (the same as tested in Example 2) was likewise cooked, however for 8 minutes as instructed on the package. The cooking water was then further analysed. The results are given in Table 4. Due to different cookingtimes, the amount of evaporated water was taken into account in the calculations.

100 ml of well-mixed cooking water was collected in a measuring cylinder and allowed to stand for 2 hours at room temperature. The amount of partly settled fluff was then recorded. This is a standard test used for checking lost matter during cooking of pasta products.

The amount of precipitate in the cooking water was also measured by centrifuging (3000 rpm for 15 minutes) 100 ml of well-mixed cooking water. The water phase was accurately removed and the amount of precipitate was then measured (as wet weight).

**Table 4. Analysis of the cooking water**

| Pasta products | Amount of partly settled fluff (ml) | Amount of precipitate from 100 ml of cooking water (g) |
|---|---|---|
| Coarsely milled oat endosperm | 22 | 6.26 |
| Commercial oat pasta | 85 | 14.08 |

The results showed the pasta according to the present invention formed only a tiny fraction of fluffy mass in comparison to the commercial oat pasta in the standard test for checking cooking resistance of pastas. Also the further analysis by centrifuging the cooking water and measuring the amount of precipitate showed that for the pasta according to the invention the amount of precipitate was less than half of the amount of precipitate of the commercial oat pasta. Thus, the cooking resistance of the pasta made of coarsely milled oat endosperm flour was significantly better. This is more attractive for the consumer and in addition, less nutrients are lost in the cooking water.

### Example 5

The preparation of pasta from coarsely milled oat endosperm flour and varying amounts of psyllium husk were tested.

The pastas were prepared as disclosed in Example 1. Evaluation of the results are given in Table 5.

**Table 5. Evaluation of tests using varying amounts of psyllium husk in the pasta**

| Psyllium husk (% by dry weight) | Processing | Cooked pasta |
|---|---|---|
| 2.0 | The dough was fragile and breaking, but the processing to pasta pieces still succeeded | Not tested |
| 4.0 | Processing worked excellent. Texture of the dough was strong and elastic | Softened easily upon cooking but did not disintegrate. Sticked lightly together when cooled |
| 6.0 | Processing worked well. The dry pasta was strong and a bit gummy-like | Softens easily upon cooking. Tight flexible texture. Sticked strongly together when cooled |

From these tests it was concluded that the addition of 2.0% by dry weight psyllium husk succeeded, but was not ideal for the endosperm flour used. Thus, the amount of psyllium husk is preferably above 2.0% such as 2.5% by dry weight or more to produce a suitable pasta dough for preparing pasta. It was also recognised that it is advantageous to use psyllium husk in an amount of at most 6.0% by dry weight

## Claims

1. An oat-based pasta product comprising 85-98% by dry weight oat endosperm flour and 2.0 -15% by dry weight psyllium.

2. The oat-based pasta product according to claim 1, wherein it comprises 85.0-98.0%, preferably 85.5-97.5%, most preferably 95.0-97.0% by dry weight oat endosperm flour and 2.0-6.0%, preferably 2.5-6.0%, most preferably 3.0-5.0% by dry weight psyllium, preferably psyllium husk.

3. The oat-based pasta product according to claim 1 or 2, wherein the endosperm flour has an ash content of at most 1.7%, preferably at most 1.6%, more preferably at most 1.5%, even more preferably at most 1.4% and most preferably at most 1.3% by weight of the endosperm flour.

4. The oat-based pasta product according to any one of claims 1 to 3, wherein it is free of wholegrain oat flour and other fractions of oat than endosperm flour.

5. The oat-based pasta product according to any one of claims 1 to 4, wherein it is free of other cereal flours.

6. The oat-based pasta product according to any one of claims 1 to 5, wherein it is free of other hydrocolloids than psyllium.

7. The oat-based pasta product according to any one of claims 1 to 6, wherein it consists of oat endosperm flour, psyllium husk and moisture.

8. The oat-based pasta product according to any one of claims 1 to 6, wherein it further comprises a colouring agent and/or a flavouring agent, preferably in an amount of 1-12% by dry weight of the pasta product.

9. The oat-based pasta product according to claim 8, wherein the colouring and/or flavouring agent is a non-legume vegetable powder, preferably selected from the group consisting of powders of carrots, tomatoes, spinach, broccoli and beet roots.

10. The oat-based pasta product according to any one of claims 1 to 9, wherein the protein content of the pasta product is 7.5-15% by weight of the pasta product.

11. The oat-based pasta product according to any one of claims 1 to 10, wherein it is free of other protein-containing components than oat, psyllium, and optional colouring and/or flavouring agents.

12. The oat-based pasta product according to any one of claims 1 to 11, wherein it is free of other starch-containing components than oat, psyllium, and optional colouring and/or flavouring agents.

13. The oat-based pasta product according to any one of claims 1 to 12, wherein the pasta product is free of pectin and/or free of fruit fibre, preferably free of apple fibre.

14. The oat-based pasta product according to any one of claims 1 to 13, wherein the pasta product is free of legume components.

15. The oat-based pasta product according to any one of claims 1 to 14, wherein the pasta product is a dry pasta, preferably comprising water in an amount of 6-14% by weight of the pasta product.

16. A method for preparing a pasta product according to any one of claims 1 to 15 comprising
- mixing oat endosperm flour, psyllium, water and, optional colouring and/or flavouring agents to prepare a pasta dough, wherein the amount of water is 45-55% by weight of the amount of dry ingredients,
- extruding the pasta dough through a nozzle with suitable openings and cutting means to form pasta pieces, and
- drying the pasta pieces according to conventional pasta drying procedures to obtain the pasta product,
wherein the total process starting from the mixing step throughout to the start of the drying step is performed at a temperature of at most 50 °C, preferably at most 40 °C.

17. An oat-based pasta product obtainable by the pasta preparation method of claim 16.
